# EUROPÄISCHE PATENTSCHRIFT

(11) **EP 3 695 490 B1**
(45) Veröffentlichungstag und Bekanntmachung des Hinweises auf die Patenterteilung: **29.03.2023**
(21) Anmeldenummer: 18769668.7
(22) Anmeldetag: 13.09.2018
(51) Int. Cl.: H02K 5/15, H02K 5/173, H02K 7/00

(54) **GETRIEBE MIT INTEGRIERTER ELEKTRISCHER MASCHINE**
TRANSMISSION WITH INTEGRATED ELECTRIC MACHINE
BOÎTE DE VITESSES DOTÉE D'UNE MACHINE ÉLECTRIQUE INTÉGRÉE

(30) Priorität: 13.10.2017 DE 102017218350
(43) Veröffentlichungstag der Anmeldung: 19.08.2020
(73) Patentinhaber: Vitesco Technologies GmbH, 93055 Regensburg (DE)
(72) Erfinder: FRÖHLICH, Holger, 13127 Berlin (DE); FUKUMOTO, Isao, 14167 Berlin (DE)
(74) Vertreter: Vitesco Technologies
(86) Internationale Anmeldenummer: PCT/EP2018/074743
(87) Internationale Veröffentlichungsnummer: WO 2019/072487

(56) Entgegenhaltungen:
- EP-A1- 1 112 884
- WO-A2-2010/108532
- DE-A1- 10 026 467
- DE-A1-102011 079 158
- FR-A- 965 860
- US-A1- 2010 180 720

## Beschreibung

Die Erfindung betrifft eine elektrische Maschine zur Anordnung in einem Getriebegehäuse, eine Getriebeanordnung mit einem Getriebegehäuse und die in dem Getriebegehäuse angeordnete erfindungsgemäße elektrische Maschine, sowie ein Hybridfahrzeug mit der erfindungsgemäßen Getriebeanordnung.

Auf dem Gebiet der Kraftfahrzeuge, insbesondere auf dem Gebiet der Personenkraftwagen, besteht ein Trend hin zu Hybridfahrzeugen, die neben einem Verbrennungsmotor auch einen elektrischen Antrieb aufweisen. Somit kann, sofern das Kraftfahrzeug über den elektrischen Antrieb angetrieben wird, vorzugsweise der CO₂-Ausstoß reduziert werden.

Bekannt ist weiter, dass derartige Hybridfahrzeuge einen Torquesplit Hybridantriebsstrang, bestehend aus einem Doppelkupplungsgetriebe, an das eine elektrische Maschine angekoppelt ist, und einer Leistungselektronik, aufweisen können. Die Leistungselektronik stellt dabei das Bindeglied zwischen einer Batterie und der elektrischen Maschine dar. Der bekannte Torquesplit Hybridantriebsstrang besteht somit aus mehreren Modulen, insbesondere aus einem Doppelkupplungsgetriebe und einer elektrischen Maschine, die aneinander gekoppelt werden. Nachteilig hierbei ist, dass die jeweiligen Module ein eigenes Gehäuse aufweisen, wodurch der Hybridantriebsstrang ein erhöhtes Gewicht und einen erhöhten Bauraum aufweisen kann. Zudem benötigt jedes Modul, sofern eine Kühlung erforderlich ist, einen eigenen Kühlkreislauf.

Die DE 10 2011 079 158 A1 beschreibt einen Elektromotor mit einem Befestigungsflansch sowie einer Getriebevorrichtung mit dem Elektromotor. Die Getriebevorrichtung weist ein Gehäuse auf, in dem ein Stator angeordnet ist. Innerhalb des Stators ist ein Rotor angeordnet. Das Gehäuse ist innenseitig über einen Lagerschild verschlossen, wobei auf dem Lagerschild ein Stutzenabschnitt ausgebildet ist.

Es besteht ein regelmäßiges Bedürfnis, den Antriebsstrang von Kraftfahrzeugen zu optimieren, um das Gewicht und/oder den Bauraum zu reduzieren. Durch eine Reduzierung des Gewichts kann vorzugsweise der Kraftstoff- und/oder Energieverbrauch des Kraftfahrzeugs reduziert werden.

Es ist die Aufgabe der vorliegenden Erfindung, eine elektrische Maschine bereitzustellen, die einen reduzierten Bauraum, ein reduziertes Gewicht aufweisen kann und zudem vereinfacht montiert werden kann.

Die Aufgabe wird gelöst durch die Gegenstände der unabhängigen Patentansprüche. Vorteilhafte Ausgestaltungen der Erfindung sind in den abhängigen Ansprüchen, der Beschreibung und den Zeichnungen angegeben, wobei jedes Merkmal sowohl einzeln als auch in Kombination einen Aspekt der Erfindung darstellen kann. Dabei können alle Kombinationen wie auch vereinzelte Kombinationen zwischen den Merkmalen der elektrischen Maschine, der Getriebeanordnung und/oder des Hybridfahrzeugs zusammen genutzt werden. Weiterhin ist es jeweils auch vorgesehen und möglich, einzelne oder mehrere Merkmale der elektrischen Maschine, der Getriebeanordnung und/oder des Hybridfahrzeugs beliebig miteinander zu kombinieren.

Erfindungsgemäß ist eine elektrische Maschine zur Anordnung in einem Getriebegehäuse vorgesehen, aufweisend eine Adaptereinrichtung, eine mit der Adaptereinrichtung verbundene Achse, einen auf der Achse über eine Lagereinrichtung um die Achse rotierbar angeordneten Rotor, und einen den Rotor in Umfangsrichtung umgebenden Stator, der in der Adaptereinrichtung beabstandet zum Rotor anordbar und zumindest teilweise fixierbar ist, die Adaptereinrichtung den Rotor und/oder den Stator teilweise abdeckt und ein Teilgehäuse der elektrischen Maschine ist, wobei der Rotor einen Rotorträger mit wenigstens einem auf dem Rotorträger angeordneten Blechpaket aufweist, und der Rotorträger einen in axialer Richtung des Rotorträgers ausgebildeten Hohlraum aufweist, der auf einer der Adaptereinrichtung zugewandten ersten Rotorträgerstirnseite eine Aufnahmeöffnung zur Aufnahme der Achse und der Lagereinrichtung umfasst.

Es ist somit ein Aspekt der Erfindung, dass die elektrische Maschine eine Adaptereinrichtung und eine Achse aufweist, wobei die Achse mit der Adaptereinrichtung vorzugsweise drehfest verbunden ist. Die Achse rotiert somit nicht. Auf der Achse ist ein Rotor angeordnet, der über eine zwischen dem Rotor und der Achse angeordnete Lagereinrichtung um die Achse rotierbar ausgebildet ist. In Umfangsrichtung des Rotors und bestandet zum Rotor ist ein Stator angeordnet. Der Stator ist mit der Adaptereinrichtung verbunden, so dass dieser zumindest teilweise von der Adaptereinrichtung gehalten ist. Die Adaptereinrichtung deckt den Rotor und/oder den Stator teilweise ab. In der Regel deckt die Adaptereinheit sowohl den Rotor als auch den Stator teilweise ab. Dies bedeutet, dass die Adaptereinrichtung ein Teilgehäuse der elektrischen Maschine ist, die den Rotor und den Stator nur partiell und somit nicht vollständig umgibt, wobei die Adaptereinrichtung den Stator trägt und der Rotor über die mit der Adaptereinrichtung verbundenen Achse um die Achse rotierbar gelagert ist.

Auf diese Weise wird eine elektrische Maschine bereitgestellt, die in einfacher Weise in ein Getriebegehäuse anordbar und mit diesem verbindbar ist. Dadurch, dass die elektrische Maschine nur ein partielles Gehäuse aufweist, können das Gewicht und der Bauraum der elektrischen Maschine reduziert werden. Bei einer Anordnung der elektrischen Maschine in einer Getriebeanordnung bzw. ein einem Getriebegehäuse können auf diese Weise der Bauraum der Getriebeanordnung und somit dessen Gewicht reduziert werden.

Weiterhin kann durch die Lagerung des Rotors auf der Achse der Adaptereinheit das Massenträgheitsmoment und das Gewicht des Rotors reduziert werden. Mit einer Senkung der Rotormasse kann eine höhere Dynamik der elektrischen Maschine durch das geringere Massenträgheitsmoment erzielt werden.

Die elektrische Maschine ist vorzugsweise eine Permanentmagnet Synchronmaschine, die besonders bevorzugt ein Hochdrehzahlkonzept aufweist, wodurch die Leistungsdichte steigerbar ist. Eine vorteilhafte Weiterbildung der Erfindung liegt darin, dass die Achse durch die Adaptereinrichtung geführt und mit dieser kraftschlüssig, formschlüssig und/oder stoffschlüssig verbunden ist. Eine formschlüssige Verbindung, beispielsweise durch ineinander greifende Vorsprünge und/oder Ausnehmungen, die auf der Achse und in der Adaptereinrichtung ausgebildet sind, stellt eine einfache und kostengünstige Möglichkeit für eine drehfeste Verbindung der Achse mit der Adaptereinrichtung dar. Die stoffschlüssige Verbindung kann vorzugsweise eine Schweißverbindung, eine Lötverbindung und/oder eine Klebeverbindung sein, mittels derer die Achse drehfest mit der Adaptereinrichtung verbindbar ist. Die getrennte Ausbildung von Achse und Adaptereinheit kann vorteilhaft sein, wenn unterschiedliche Materialien für die Achse und für die Adaptereinheit verwendet werden sollen. Ebenso kann es herstellungstechnisch einfacher sein, die Achse und die Adaptereinrichtung getrennt zu fertigen und anschließend miteinander zu verbinden.

Alternativ zu der mehrteiligen Ausbildung von Achse und Adaptereinrichtung ist es denkbar, dass die Adaptereinrichtung und die Achse einstückig ausgebildet sind. Durch die einstückige Ausbildung von Adaptereinrichtung und Achse kann die Teilevielfalt reduziert werden. Zudem entfällt der Arbeitsschritt des Verbindens von Achse und Adaptereinrichtung, wodurch der Herstellungsvorgang beschleunigt und die Herstellungskosten reduziert werden können.

Erfindungsgemäß ist vorgesehen, dass der Rotor einen Rotorträger mit wenigstens einem auf dem Rotorträger angeordneten Blechpaket aufweist, wobei der Rotorträger einen in axialer Richtung des Rotorträgers ausgebildeten Hohlraum aufweist, der auf einer der Adaptereinrichtung zugewandten ersten Rotorträgerstirnseite eine Aufnahmeöffnung zur Aufnahme der Achse und der Lagereinrichtung umfasst. Auf diese Weise ist der Rotor mehrteilig ausgebildet und umfasst zumindest den Rotorträger und das auf dem Rotorträger angeordnete Blechpaket.

In einer vorteilhaften Weiterbildung der Erfindung ist vorgesehen, dass die Adaptereinrichtung auf einer dem Rotor zugewandten Innenseite einen die Achse zumindest abschnittsweise umgebenden Vorsprung aufweist. Über den Vorsprung kann die auf der Achse angeordnete Lagereinrichtung in axialer Richtung zumindest in einer Richtung fixiert werden. Der Vorsprung ist somit vorzugsweise als Anschlagselement für die Lagereinrichtung ausgebildet.

In diesem Zusammenhang liegt eine bevorzugte Weiterbildung der Erfindung darin, dass der Vorsprung kegelstumpfartig ausgebildet ist, und der Kegelstumpf mit zunehmendem Abstand von der Adaptereinrichtung zulaufend ausgebildet ist. Auf diese Weise kann durch den querschnittsreduzierenden Verlauf des Vorsprungs das Gewicht der Adaptereinrichtung und somit der elektrischen Maschine reduziert werden.

Eine vorteilhafte Weiterbildung der Erfindung liegt darin, dass die Adaptereinrichtung auf der Innenseite eine zumindest teilweise umlaufende Aufkantung mit einer ersten Ausnehmung zur Aufnahme des Stators aufweist. Die Aufkantung ist vorzugsweise kreisringförmig ausgebildet, wobei der Kreisring geschlossen aber auch unterbrochen ausgebildet sein kann. Ist der Kreisring unterbrochen ausgebildet, kann das Gewicht der Adaptereinrichtung und somit der elektrischen Maschine reduziert werden. Die Ausnehmung ist vorzugsweise als Falz, insbesondere als umlaufender Falz, in der Aufkantung ausgebildet. Somit kann der Stator zumindest abschnittsweise in den Falz eingreifen, wodurch dieser in radialer Richtung und zumindest in einer Richtung axial lagerbar ist.

Eine vorteilhafte Weiterbildung der Erfindung liegt darin, dass die Lagereinrichtung einen ersten Lagerring und einen zweiten Lagerring umfasst, der erste Lagerring und der zweite Lagerring auf der Achse angeordnet ist, und eine innere Mantelfläche des Hohlraums einen ersten Lagersitz mit einem ersten Anschlag zur Aufnahme und Lagefixierung des ersten Lagerrings in axialer Richtung aufweist, und einen zweiten Lagersitz mit einem zweiten Anschlag zur Aufnahme und Lagefixierung des zweiten Lagerrings in axialer Richtung umfasst. Auf dieser Weise können in einem ersten Schritt der erste Lagerring und der zweite Lagerring in dem jeweiligen Lagersitz angeordnet werden, wodurch diese durch den jeweiligen Anschlag in axialer Richtung des Rotorträgers positionierbar sind. In einem zweiten Schritt kann die Achse über die Aufnahmeöffnung in den Hohlraum eingeführt und durch die Lagerringe gesteckt werden, so dass der Rotor auf der Achse rotierbar gelagert ist. In Verbindung mit dem die Achse umgebenden Vorsprung kann dabei der zweite Lagerring in axialer Richtung des Rotors fixiert und als Festlager ausgebildet werden. Der zweite Lagerring ist folglich zwischen dem zweiten Anschlag und dem Vorsprung in axialer Richtung fixiert bzw. eingespannt. Der erste Lagerring ist in dem ersten Lagersitz vorzugsweise als Loslager ausgebildet. Auf diese Weise kann die Gefahr eines gegenseitigen Verspannens der Lagerringe reduziert werden.

Grundsätzlich kann der in den Hohlraum hineinragende Abschnitt der Achse nur einen Achsdurchmesser aufweisen. Eine vorteilhafte Weiterbildung der Erfindung liegt darin, dass der in den Hohlraum hineinragende Abschnitt der Achse einen ersten Achsdurchmesser und einen von dem ersten Achsdurchmesser verschiedenen zweiten Achsdurchmesser aufweist, wobei der Abschnitt des zweiten Achsdurchmessers zwischen dem Abschnitt des ersten Achsdurchmessers und der Adaptereinrichtung ausgebildet ist, und der zweite Achsdurchmesser größer als der erste Achsdurchmesser ist, wobei der erste Lagerring auf dem ersten Achsdurchmesser angeordnet ist und der zweite Lagerring auf dem zweiten Achsdurchmesser angeordnet ist. Somit kann die Achse wenigstens zwei Abschnitte mit unterschiedlichen Achsdurchmessern aufweisen. Über die unterschiedlichen Achsdurchmesser kann beispielweise der radiale Abstand zwischen der Achse und dem auf der inneren Mantelfläche ausgebildeten erste Lagersitz, und der radiale Abstand zwischen der Achse und dem auf der inneren Mantelfläche ausgebildeten zweiten Lagersitz gleich ausgebildet sein. Somit kann das Massenträgheitsmoment des Rotors nebst Lagereinrichtung reduziert werden.

Eine vorteilhafte Weiterbildung der Erfindung liegt darin, dass der Rotorträger auf einer der Adaptereinrichtung abgewandten zweiten Rotorträgerstirnseite einen Wellenzapfen aufweist, der mit einer Getriebeeingangswelle koppelbar ist. In diesem Zusammenhang ist vorteilhaft vorgesehen, dass der Wellenzapfen und die Getriebeeingangswelle über eine Steckkupplung miteinander formschlüssig koppelbar sind. Vorzugsweise kann beim Einführen der elektrischen Maschine in das Getriebegehäuse einer Getriebeanordnung die Steckkupplung des Wellenzapfens in eine korrespondierende Steckaufnahme der Getriebeeingangswelle eingreifen. Auf diese Weise kann die elektrische Maschine in einfacher Weise mit der Getriebeeingangswelle gekoppelt werden, um eine Drehbewegung der elektrischen Maschine, insbesondere des Rotors, auf die Getriebeeingangswelle zu übertragen. Somit können der Montageaufwand und die Fertigungskosten einer Getriebeanordnung mit der integrierten elektrischen Maschine reduziert werden.

In einer vorteilhaften Weiterbildung der Erfindung ist vorgesehen, dass der Rotorträger einen Kühlkanal mit einer Einlassöffnung und wenigstens einer Auslassöffnung aufweist. In diesem Zusammenhang liegt eine vorteilhafte Weiterbildung der Erfindung darin, dass die Einlassöffnung an einer Wellenzapfenstirnseite des Wellenzapfens ausgebildet ist, und die wenigstens eine Auslassöffnung auf einer äußeren Mantelfläche des Rotorträgers in Angrenzung des auf dem Rotorträger angeordneten Blechpakets und/oder auf der der Adaptereinrichtung zugewandten ersten Rotorträgerstirnseite. Somit wird ein Rotorträger mit einem Kühlkanal bereitgestellt, bei dem ein Kühlmedium über die Wellenzapfenstirnseite dem Rotorträger zugeführt werden kann, wobei das Kühlmedium durch den Rotorträger geführt wird, um diesen zu kühlen. Unter Fliehkrafteinfluss in Folge einer Rotation des Rotors kann das Kühlmedium über die Auslassöffnung aus dem Rotorträger geschleudert werden, um auf diese Weise vorzugsweise Wicklungsköpfe des den Rotor umgebenden Stators zu kühlen.

Eine vorteilhafte Weiterbildung der Erfindung liegt darin, dass auf einer der Adaptereinrichtung abgewandten Achsstirnseite der Achse ein Sensormagnet oder ein Magnetfeldsensor und auf einer der Achsstirnseite zugewandten Kopfseite des Rotorträgers der jeweils andere Sensor ausgebildet ist. Besonders bevorzugt ist der Sensormagnet mit dem Rotor bzw. dem Rotorträger verbunden und entsprechend auf der Kopfseite des Rotorträgers angeordnet, und der Magnetfeldsensor ist auf der Achsstirnseite ausgebildet. Bei einer Rotation des Rotors weist der Sensormagnet somit die gleiche Drehzahl wie der Rotor auf. Ein sich periodisch änderndes Magnetfeld des rotierenden Sensormagneten ist von dem Magnetfeldsensor erfassbar, woraus der Drehwinkel, die Drehzahl, eine Änderung der Drehwinkellage und/oder der Drehzahl und die Drehrichtung des Rotors in einfacher Weise ermittelbar sind.

Die Erfindung betrifft zudem eine Getriebeanordnung für ein Hybridfahrzeug, umfassend ein Getriebe, vorzugsweise ein Doppelkupplungsgetriebe, mit einem das Getriebe umhüllenden Getriebegehäuse, wobei das Getriebegehäuse einen Wandungsvorsprung zur Aufnahme der erfindungsgemäßen elektrischen Maschine aufweist, und der Wandungsvorsprung mit der Adaptereinrichtung verbindbar ist, so dass der Rotor und der Stator durch das Getriebegehäuse und/oder den Wandungsvorsprung und die Adaptereinrichtung eingehaust ist.

Es ist somit ein Aspekt der Erfindung, dass der Rotor und der Stator über das Teilgehäuse, nämlich die Adaptereinrichtung, und den Wandungsvorsprung und/oder das Getriebegehäuse eingehaust werden bzw. sind. Dadurch, dass die elektrische Maschine kein eigenes, den Rotor und den Stator umgebendes Gehäuse aufweist, können das Gewicht und der Bauraum der Getriebeanordnung reduziert werden.

Die integrierte elektrische Maschine kann bauartbedingt große Vorteile gegenüber anderen modularen Konzepten aufweisen. Durch eine achsparallele Anordnung der elektrischen Maschine zum Getriebe ist es möglich, unterschiedliche Übersetzungsverhältnisse in der Anbindung an das Getriebe zu wählen und so Hochdrehzahlkonzepte zu verwirklichen und eine einfache Abkopplung vom mechanischen Antriebsstrang zu realisieren. Dies kann die Betriebspunkte für den Motor optimieren und dessen Lebensdauer erhöhen. Zudem ist eine deutlich kleinere Hochdrehzahl elektrische Maschine einsetzbar, die leichter und kostengünstiger ist und die Bauraumlänge der Getriebeanordnung nicht oder nur geringfügig verändert.

Eine vorteilhafte Weiterbildung der Erfindung liegt darin, dass der Wandungsvorsprung zumindest abschnittsweise eine zweite Ausnehmung zur Aufnahme des Stators aufweist. Auf diese Weise kann der Stator vorzugsweise zwischen der ersten Ausnehmung der Adaptereinrichtung und der zweiten Ausnehmung des Wandungsvorsprungs in axialer Richtung eingeklemmt und somit in axialer Richtung fixiert werden. Die erste Ausnehmung und die zweite Ausnehmung sind vorzugsweise jeweils als umlaufender Falz ausgebildet, so dass der in der ersten Ausnehmung und der zweiten Ausnehmung eingreifende Stator in radialer Richtung fixierbar ist. Auf diese Weise kann eine lagesichere Fixierung des Stators bereitgestellt werden.

Abschließend betrifft die Erfindung ein Hybridfahrzeug mit der erfindungsgemäßen Getriebeanordnung.

Weitere Merkmale und Vorteile der vorliegenden Erfindung ergeben sich aus den Unteransprüchen sowie den nachfolgenden Ausführungsbeispielen. Die Ausführungsbeispiele sind nicht einschränkend, sondern vielmehr als beispielhaft zu verstehen, Sie sollen den Fachmann in die Lage versetzen, die Erfindung auszuführen. Der Anmelder behält sich vor, einzelne oder mehrere der in den Ausführungsbeispielen offenbarten Merkmale zum Gegenstand von Patentansprüchen zu machen oder solche Merkmale in bestehende Patentansprüche aufzunehmen. Die Ausführungsbeispiele werden anhand von Figuren näher erläutert.

In diesen zeigen:
- Fig. 1: eine schematische Schnittdarstellung einer Getriebeanordnung mit einer integrierten elektrischen Maschine,
- Fig. 2: einen Längsschnitt durch die elektrische Maschine,
- Fig. 3: eine Ansicht der elektrischen Maschine,
- Fig. 4: einen Längsschnitt durch die Getriebeanordnung mit der integrierten elektrischen Maschine.

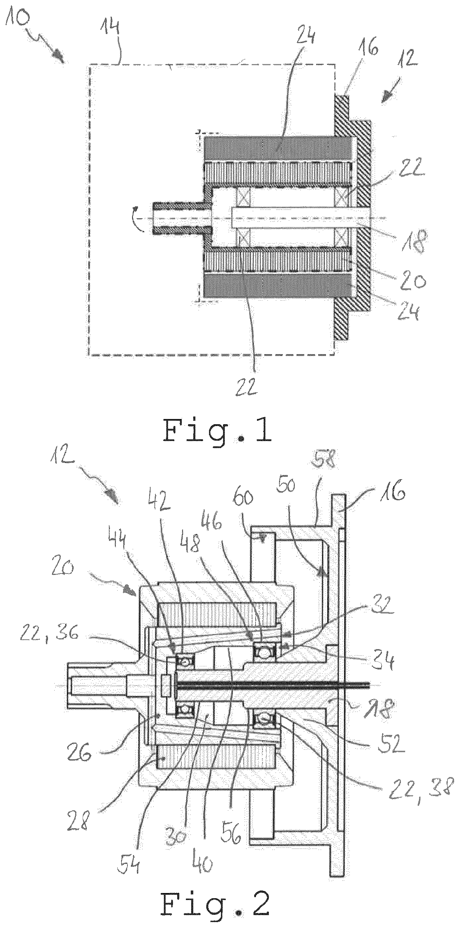

In Figur 1 ist ein schematischer Längsschnitt durch eine Getriebeanordnung 10 mit einer integrierten elektrischen Maschine 12 gezeigt. Die Getriebeanordnung 10 umfasst ein Getriebegehäuse 14 eines Getriebes (nicht dargestellt), in das die elektrische Maschine 12 zumindest teilweise eingreift.

Die elektrische Maschine 12 weist eine Adaptereinrichtung 16 und eine mit der Adaptereinrichtung 16 drehfest verbundene Achse 18 auf. Die Achse 18 ist somit fest, insbesondere formschlüssig und/oder stoffschlüssig mit der Adaptereinrichtung 16 verbunden.

Auf der Achse 18 ist ein Rotor 20 angeordnet, der über eine zwischen dem Rotor 20 und der Achse 18 angeordnete Lagereinrichtung 22 um die Achse 18 rotierbar ausgebildet ist. In Umfangsrichtung des Rotors 20 und bestandet zum Rotor 20 ist ein Stator 24 angeordnet. Der Stator 24 ist mit der Adaptereinrichtung 16 verbunden, so dass dieser zumindest teilweise von der Adaptereinrichtung 16 gehalten und/oder in der Lage fixiert ist. Die Adaptereinrichtung 16 deckt den Rotor 20 und den Stator 24 teilweise ab. Dies bedeutet, dass die Adaptereinrichtung 16 als ein Teilgehäuse der elektrischen Maschine 12 angesehen werden kann, die den Rotor 20 und den Stator 24 partiell und somit nicht vollständig umgibt. Die als Teilgehäuse ausgebildete Adaptereinrichtung 16 trägt den Stator 24 und den Rotor 20, wobei letzterer über die mit der Adaptereinrichtung 16 verbundene Achse 18 um deren Längsrichtung rotierbar gelagert ist.

Die elektrische Maschine 12 greift zumindest teilweise in das Getriebegehäuse 14 ein, wobei die Adaptereinrichtung 16 mit dem Getriebegehäuse 14 verbunden wird, so dass der Rotor 20 und der Stator 24 von dem Getriebegehäuse 14 und der Adaptereinrichtung 16 umschlossen ist.

Auf diese Weise wird eine elektrische Maschine 12 bereitgestellt, die in einfacher Weise in dem Getriebegehäuse 14 anordbar und mit diesem verbindbar ist. Dadurch, dass die elektrische Maschine 12 nur ein partielles Gehäuse aufweist, können das Gewicht und der Bauraum der elektrischen Maschine 12 reduziert werden. Bei der Anordnung der elektrischen Maschine 12 in der Getriebeanordnung 10 bzw. in dem Getriebegehäuse 14 können auf diese Weise der Bauraum der Getriebeanordnung 10 und somit dessen Gewicht reduziert werden.

In Figur 2 ist ein Längsschnitt durch die elektrische Maschine 12 gezeigt. Der Rotor 20 weist einen Rotorträger 26 mit wenigstens einem auf dem Rotorträger 26 angeordneten Blechpaket 28 auf. Der Rotorträger 26 umfasst einen in axialer Richtung des Rotorträgers 26 ausgebildeten Hohlraum 30, der auf einer der Adaptereinrichtung 16 zugewandten ersten Rotorträgerstirnseite 32 eine Aufnahmeöffnung 34 zur Aufnahme der Achse 18 und der Lagereinrichtung 22 aufweist.

Die Lagereinrichtung 22 umfasst einen ersten Lagerring 36 und einen zweiten Lagerring 38, wobei der erste Lagerring 36 und der zweite Lagerring 38 jeweils auf der Achse 18 angeordnet sind. Eine innere Mantelfläche 40 des Hohlraums 30 bildet einen ersten Lagersitz 42 mit einem ersten Anschlag 44 zur Aufnahme und Lagefixierung des ersten Lagerrings 36 in axialer Richtung aus. Zudem bildet die innere Mantelfläche 40 einen zweiten Lagersitz 46 mit einem zweiten Anschlag 48 zur Aufnahme und Lagefixierung des zweiten Lagerrings 38 aus. Auf dieser Weise können in einem ersten Schritt der erste Lagerring 36 und der zweite Lagerring 38 in dem jeweiligen Lagersitz 42, 46 angeordnet werden, wodurch diese durch den jeweiligen Anschlag 44, 48 in axialer Richtung des Rotorträgers 26 positionierbar sind.

Die Adaptereinrichtung 16 weist auf einer dem Rotor 20 zugewandten Innenseite 50 einen die Achse 18 zumindest abschnittsweise umgebenden Vorsprung 52 auf. Im vorliegenden Ausführungsbeispiel ist der Vorsprung 52 kegelstumpfartig ausgebildet, wobei der Kegelstumpf mit zunehmendem Abstand von der Adaptereinrichtung 16 zulaufend ausgebildet ist. Auf diese Weise kann durch den querschnittsreduzierenden Verlauf des Vorsprungs 52 das Gewicht der Adaptereinrichtung 16 und somit der elektrischen Maschine 12 reduziert werden.

In einem zweiten Schritt wird die Achse 18 über die Aufnahmeöffnung 34 in den Hohlraum 30 eingeführt und durch die Lagerringe 36, 38 gesteckt, so dass der Rotor 20 auf der Achse 18 rotierbar gelagert ist. In Verbindung mit dem die Achse 18 umgebenden Vorsprung 52 wird der zweite Lagerring 38 in axialer Richtung des Rotors 20 fixiert und als Festlager ausgebildet. Der zweite Lagerring 38 ist folglich zwischen dem zweiten Anschlag 48 und dem Vorsprung 52 in axialer Richtung fixiert bzw. eingespannt. Der Vorsprung 52 bildet somit ein Anschlagelement für den zweiten Lagerring 38 aus. Der erste Lagerring 36 ist in dem ersten Lagersitz 42 als Loslager ausgebildet. Auf diese Weise kann die Gefahr eines gegenseitigen Verspannens der Lagerringe 36, 38 reduziert werden.

Weiterhin ist ersichtlich, dass der in den Hohlraum 30 hineinragende Abschnitt der Achse 18 einen ersten Achsdurchmesser 54 und einen von dem ersten Achsdurchmesser 54 verschiedenen zweiten Achsdurchmesser 56 aufweist, wobei der Abschnitt mit dem zweiten Achsdurchmesser 56 zwischen dem Abschnitt mit dem ersten Achsdurchmesser 54 und der Adaptereinrichtung 16 ausgebildet ist. Der zweite Achsdurchmesser 56 weist gegenüber dem ersten Achsdurchmesser 54 einen größeren Achsdurchmesser auf. Der erste Lagerring 36 ist auf dem Abschnitt des ersten Achsdurchmessers 54 angeordnet, und der zweite Lagerring 38 lagert auf dem Abschnitt mit dem zweiten Achsdurchmesser 56. Über die unterschiedlichen Achsdurchmesser kann der radiale Abstand zwischen der Achse 18 und dem auf der inneren Mantelfläche 50 ausgebildeten erste Lagersitz 36, und der radiale Abstand zwischen der Achse 18 und dem auf der inneren Mantelfläche 50 ausgebildeten zweiten Lagersitz 38 gleich ausgebildet sein. Somit kann das Massenträgheitsmoment des Rotors 20 nebst Lagereinrichtung 22 reduziert werden.

Weiterhin weist die Adaptereinrichtung 16 auf der Innenseite 50 eine zumindest teilweise umlaufende Aufkantung 58 mit einer ersten Ausnehmung 60 zur Aufnahme des Stators 24 auf. Die Aufkantung 58 ist im vorliegenden Ausführungsbeispiel kreisringförmig ausgebildet, wobei der Kreisring geschlossen ausgebildet ist. Die erste Ausnehmung 60 ist als umlaufender Falz in der Aufkantung 58 ausgebildet. Somit kann der Stator 24 zumindest abschnittsweise in den Falz 60 eingreifen, wodurch dieser in radialer Richtung und in axialer Richtung lagerbar ist.

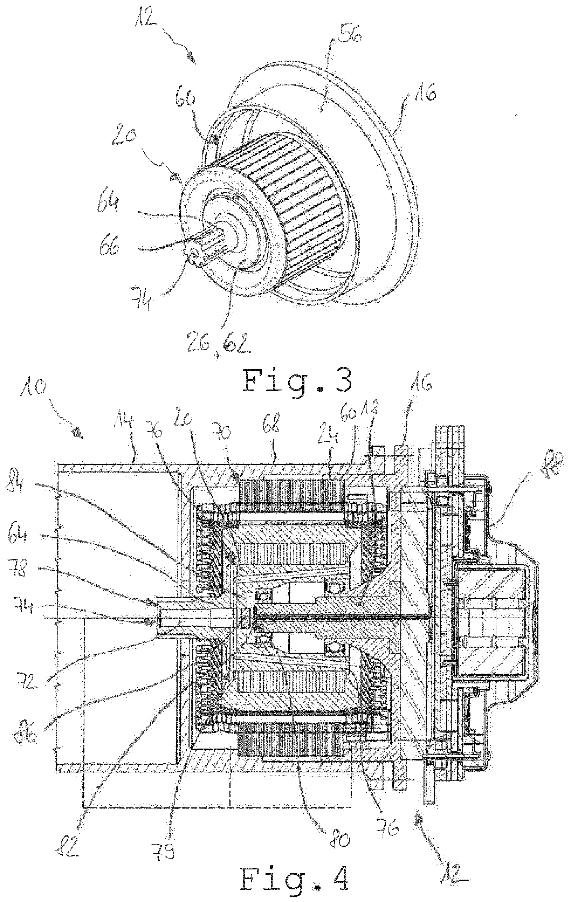

Der Figur 3 ist eine Ansicht der elektrischen Maschine 12 zu entnehmen. Der Rotorträger 26 weist auf einer der Adaptereinrichtung 16 abgewandten zweiten Rotorträgerstirnseite 62 einen Wellenzapfen 64 auf, der mit einer Getriebeeingangswelle (nicht dargestellt) eines Getriebes koppelbar ist. Hierzu weisen der Wellenzapfen 64 und die Getriebeeingangswelle jeweils eine Steckkupplung 66 auf, mittels derer der Wellenzapfen 64 und die Getriebeeingangswelle miteinander formschlüssig koppelbar sind. Somit kann beim Einführen der elektrischen Maschine 12 in das Getriebegehäuse 14 einer Getriebeanordnung 10 die Steckkupplung 66 des Wellenzapfens 64 in eine korrespondierende Steckaufnahme der Getriebeeingangswelle eingreifen. Auf diese Weise kann die elektrische Maschine 12 in einfacher Weise mit der Getriebeeingangswelle gekoppelt werden, um eine Drehbewegung der elektrischen Maschine 12, insbesondere des Rotors 20, auf die Getriebeeingangswelle zu übertragen. Somit können der Montageaufwand und die Fertigungskosten der Getriebeanordnung 10 mit der integrierten elektrischen Maschine 12 reduziert werden. Figur 4 zeigt die Getriebeanordnung 10 in einem Längsschnitt. Das Getriebegehäuse 14 weist einen Wandungsvorsprung 68 zur Aufnahme der elektrischen Maschine 12 auf. Der Wandungsvorsprung 68 ist mit der Adaptereinrichtung 16 vorzugsweise über eine Schraubverbindung verbindbar, so dass der Rotor 20 und der Stator 24 durch das Getriebegehäuse 14 und/oder den Wandungsvorsprung 68 und die Adaptereinrichtung 16 eingehaust sind. Somit erfordert die elektrische Maschine 12 kein eigenes, den Rotor 20 und den Stator 24 umgebendes Gehäuse, wodurch das Gewicht und der Bauraum der Getriebeanordnung 10 reduziert werden können.

Der Wandungsvorsprung 68 weist zumindest abschnittsweise eine zweite Ausnehmung 70 zur Aufnahme des Stators 24 auf. Auf diese Weise kann der Stator 24 vorzugsweise zwischen der ersten Ausnehmung 60 der Adaptereinrichtung 16 und der zweiten Ausnehmung 70 des Wandungsvorsprungs 68 in axialer Richtung eingeklemmt und somit in axialer Richtung fixiert werden. Die erste Ausnehmung 60 und die zweite Ausnehmung 70 sind jeweils als umlaufender Falz ausgebildet, so dass der in der ersten Ausnehmung 60 und der zweiten Ausnehmung 70 eingreifende Stator 24 in radialer Richtung und in axialer Richtung fixierbar ist.

Weiterhin ist vorgesehen, dass der Rotorträger 26 einen Kühlkanal 72 mit einer Einlassöffnung 74 und wenigstens einer Auslassöffnung 76 aufweist. Die Einlassöffnung 74 ist an einer Wellenzapfenstirnseite 78 des Wellenzapfens 64 ausgebildet. Die Auslassöffnung 76 ist auf einer äußeren Mantelfläche 79 des Rotorträgers 26 in Angrenzung des auf dem Rotorträger 26 angeordneten Blechpakets 28. Weiterhin ist eine Auslassöffnung 76 auf der der Adaptereinrichtung 16 zugewandten ersten Rotorträgerstirnseite 32 ausgebildet. Somit wird ein Rotorträger mit einem Kühlkanal 72 bereitgestellt, bei dem ein Kühlmedium über die Wellenzapfenstirnseite 78 dem Rotorträger 26 zugeführt werden kann, wobei das Kühlmedium durch den Rotorträger 26 geführt wird, um diesen zu kühlen. Unter Fliehkrafteinfluss in Folge einer Rotation des Rotors 20 wird das Kühlmedium über die Auslassöffnungen 76 aus dem Rotorträger 26 geschleudert und kann auf diese Weise vorzugsweise Wicklungsköpfe des den Rotor 20 umgebenden Stators 24 kühlen. Der Kühlkanal 72 weist vorzugsweise eine radiale Durchmesserausweitung auf, dass durch die Zentrifugalkräfte des rotierenden Rotors 20 das Kühlmedium zu der bzw. den Austrittsöffnungen 76 gefördert wird.

Wegen der in dem Getriebegehäuse 14 integrierten Anordnung der elektrischen Maschine 12 kann zur Kühlung des Getriebes und der elektrischen Maschine 12 ein Kühlkreislauf verwendet werden, wodurch die Kosten und der Bauraumbedarf des Kühlkreislaufs reduziert werden können.

Auf einer der Adaptereinrichtung 16 abgewandten Achsstirnseite 80 der Achse 18 ist ein Magnetfeldsensor 82 angeordnet, und auf einer der Achsstirnseite 80 zugewandten Kopfseite 84 des Rotorträgers 26 ist ein Sensormagnet 86 ausgebildet. Bei einer Rotation des Rotors 20 weist der Sensormagnet 86 somit die gleiche Drehzahl wie der Rotor 20 auf. Ein sich periodisch änderndes Magnetfeld des rotierenden Sensormagneten 86 ist von dem Magnetfeldsensor 82 erfassbar, woraus der Drehwinkel, die Drehzahl, eine Änderung der Drehwinkellage und/oder der Drehzahl und die Drehrichtung des Rotors ermittelbar ist.

Weiterhin ist der Figur 14 zu entnehmen, dass die Adaptereinrichtung 16 Träger eines Inverters 88 ist. Der Inverter 88 kann somit auf die Adaptereinrichtung 16 aufgeschraubt werden, so dass die Adaptereinrichtung 16 zwischen dem Getriebe und dem Inverter 88 angeordnet bzw. ausgebildet ist.

### Bezugszeichen

- 10: Getriebeanordnung
- 12: Elektrische Maschine
- 14: Getriebegehäuse
- 16: Adaptereinrichtung
- 18: Achse
- 20: Rotor
- 22: Lagereinrichtung
- 24: Stator
- 26: Rotorträger
- 28: Blechpaket
- 30: Hohlraum
- 32: Erste Rotorträgerstirnseite
- 34: Aufnahmeöffnung
- 36: Erster Lagerring
- 38: Zweiter Lagerring
- 40: Innere Mantelfläche
- 42: Erster Lagersitz
- 44: Erster Anschlag
- 46: Zweiter Lagersitz
- 48: Zweiter Anschlag
- 50: Innenseite
- 52: Vorsprung
- 54: Erster Achsdurchmesser
- 56: Zweiter Achsdurchmesser
- 58: Aufkantung
- 60: Erste Ausnehmung, Falz
- 62: Zweite Rotorträgerstirnseite
- 64: Wellenzapfen
- 66: Steckkupplung
- 68: Wandungsvorsprung
- 70: Zweite Ausnehmung
- 72: Kühlkanal
- 74: Einlassöffnung
- 76: Auslassöffnung
- 78: Wellenzapfenstirnseite
- 79: Äußere Mantelfläche Rotorträger
- 80: Achsstirnseite
- 82: Magnetfeldsensor
- 84: Kopfseite
- 86: Sensormagnet
- 88: Inverter

## Patentansprüche

1. Elektrische Maschine (12) zur Anordnung in einem Getriebegehäuse (14), aufweisend
- eine Adaptereinrichtung (16),
- eine mit der Adaptereinrichtung (16) verbundene Achse (18),
- einen auf der Achse (18) über eine Lagereinrichtung (22) um die Achse (18) rotierbar angeordneten Rotor (20), und
- einen den Rotor (20) in Umfangsrichtung umgebenden Stator (24), der in der Adaptereinrichtung (16) beabstandet zum Rotor (20) anordbar und zumindest teilweise fixierbar ist, wobei
- die Adaptereinrichtung (16) den Rotor (20) und/oder den Stator (24) teilweise abdeckt und ein Teilgehäuse der elektrischen Maschine (12) ist, **dadurch gekennzeichnet dass**
- der Rotor (20) einen Rotorträger (26) mit wenigstens einem auf dem Rotorträger (26) angeordneten Blechpaket (28) aufweist, und
- der Rotorträger (26) einen in axialer Richtung des Rotorträgers (26) ausgebildeten Hohlraum (30) aufweist, der auf einer der Adaptereinrichtung (16) zugewandten ersten Rotorträgerstirnseite (32) eine Aufnahmeöffnung (34) zur Aufnahme der Achse (18) und der Lagereinrichtung (22) umfasst.

2. Elektrische Maschine nach Anspruch 1, **dadurch gekennzeichnet, dass** die Achse (18) durch die Adaptereinrichtung (16) geführt und mit dieser kraftschlüssig, formschlüssig und/oder stoffschlüssig verbunden ist.

3. Elektrische Maschine nach Anspruch 1, **dadurch gekennzeichnet, dass** die Adaptereinrichtung (16) und die Achse (18) einstückig ausgebildet sind.

4. Elektrische Maschine nach einem der vorherigen Ansprüche, **dadurch gekennzeichnet, dass** die Adaptereinrichtung (16) auf einer dem Rotor (20) zugewandten Innenseite (50) einen die Achse (18) zumindest abschnittsweise umgebenden Vorsprung (52) aufweist.

5. Elektrische Maschine nach einem der vorherigen Ansprüche, **dadurch gekennzeichnet, dass** die Adaptereinrichtung (16) auf der Innenseite (50) eine zumindest teilweise umlaufende Aufkantung (58) mit einer ersten Ausnehmung (60) zur Aufnahme des Stators (24) aufweist.

6. Elektrische Maschine nach einem der vorstehenden Ansprüche, **dadurch gekennzeichnet, dass**
- die Lagereinrichtung (22) einen ersten Lagerring (36) und einen zweiten Lagerring (38) umfasst,
- der erste Lagerring (36) und der zweite Lagerring (38) auf der Achse (18) angeordnet ist, und
- eine innere Mantelfläche (40) des Hohlraums (30) einen ersten Lagersitz (42) mit einem ersten Anschlag (44) zur Aufnahme und Lagefixierung des ersten Lagerrings (36) in axialer Richtung aufweist, und einen zweiten Lagersitz (46) mit einem zweiten Anschlag (48) zur Aufnahme und Lagefixierung des zweiten Lagerrings (38) in axialer Richtung umfasst.

7. Elektrische Maschine nach einem der vorstehenden Ansprüche, **dadurch gekennzeichnet, dass**
- der in den Hohlraum (30) hineinragende Abschnitt der Achse (18) einen ersten Achsdurchmesser (54) und einen von dem ersten Achsdurchmesser (54) verschiedenen zweiten Achsdurchmesser (56) aufweist, wobei
- der Abschnitt des zweiten Achsdurchmesser (56) zwischen dem Abschnitt des ersten Achsdurchmessers (54) und der Adaptereinrichtung (16) ausgebildet ist, und
- der zweite Achsdurchmesser (56) größer als der erste Achsdurchmesser (54) ist, wobei
- der erste Lagerring (36) auf dem ersten Achsdurchmesser (54) angeordnet ist und der zweite Lagerring (38) auf dem zweiten Achsdurchmesser (56) angeordnet ist.

8. Elektrische Maschine nach einem der vorherigen Ansprüche, **dadurch gekennzeichnet, dass** der Rotorträger (26) auf einer der Adaptereinrichtung (16) abgewandten zweiten Rotorträgerstirnseite (62) einen Wellenzapfen (64) aufweist, der mit einer Getriebeeingangswelle koppelbar ist.

9. Elektrische Maschine nach einem der vorherigen Ansprüche, **dadurch gekennzeichnet, dass** der Rotorträger (26) einen Kühlkanal (72) mit einer Einlassöffnung (74) und wenigstens einer Auslassöffnung (76) aufweist.

10. Elektrische Maschine nach Anspruch 9 **dadurch gekennzeichnet, dass**
- die Einlassöffnung (74) an einer Wellenzapfenstirnseite (78) des Wellenzapfens (64) ausgebildet ist, und
- die wenigstens eine Auslassöffnung (76) auf einer äußeren Mantelfläche (79) des Rotorträgers (26) in Angrenzung des auf dem Rotorträger (26) angeordneten Blechpakets (28) und/oder auf der der Adaptereinrichtung (16) zugewandten ersten Rotorträgerstirnseite (32).

11. Elektrische Maschine nach einem der vorherigen Ansprüche, **dadurch gekennzeichnet, dass** auf einer der Adaptereinrichtung (16) abgewandten Achsstirnseite (80) der Achse (18) ein Sensormagnet (86) oder ein Magnetfeldsensor (82) und auf einer der Achsstirnseite (80) zugewandten Kopfseite (84) des Rotorträgers (26) der jeweils andere Sensor ausgebildet ist.

12. Getriebeanordnung (10) für ein Hybridfahrzeug, umfassend ein Getriebe, vorzugsweise ein Doppelkupplungsgetriebe, mit einem das Getriebe umhüllenden Getriebegehäuse (14), wobei
- das Getriebegehäuse (14) einen Wandungsvorsprung (68) zur Aufnahme der elektrischen Maschine (12) nach einem der vorhergehenden Ansprüche aufweist,
- und der Wandungsvorsprung (68) mit der Adaptereinrichtung (16) verbindbar ist, so dass der Rotor (20) und der Stator (24) durch das Getriebegehäuse (14) und/oder den Wandungsvorsprung (68) und die Adaptereinrichtung (16) eingehaust ist.

13. Getriebeanordnung nach Anspruch 12, **dadurch gekennzeichnet, dass** der Wandungsvorsprung (68) zumindest abschnittsweise eine zweiten Ausnehmung (70) zur Aufnahme des Stators (24) aufweist.

14. Hybridfahrzeug mit einer Getriebeanordnung (10) nach Anspruch 12.

## Claims

1. Electric machine (12) for arrangement in a transmission housing (14), having
- an adapter device (16),
- an axle (18) connected to the adapter device (16),
- a rotor (20) arranged on the axle (18) by means of a bearing device (22) so as to be rotatable about the axle (18), and
- a stator (24) which surrounds the rotor (20) in a circumferential direction, which is arrangeable spaced apart from the rotor (20), and at least partially fixable, in the adapter device (16), wherein
- the adapter device (16) partially covers the rotor (20) and/or the stator (24), and is a sub-housing of the electric machine (12), **characterized in that**
- the rotor (20) has a rotor carrier (26) with at least one laminated core (28) arranged on the rotor carrier (26), and
- the rotor carrier (26) has a cavity (30) which is formed in an axial direction of the rotor carrier (26) and which comprises, on a first rotor carrier face side (32) facing towards the adapter device (16), a receiving opening (34) for receiving the axle (18) and the bearing device (22).

2. Electric machine according to Claim 1, **characterized in that** the axle (18) is guided through the adapter device (16) and is connected to the latter in a non-positively locking, positively locking and/or cohesive manner.

3. Electric machine according to Claim 1, **characterized in that** the adapter device (16) and the axle (18) are formed as a single piece.

4. Electric machine according to one of the preceding claims, **characterized in that** the adapter device (16) has, on an inner side (50) facing towards the rotor (20), a projection (52) which surrounds the axle (18) at least in certain portions.

5. Electric machine according to one of the preceding claims, **characterized in that** the adapter device (16) has, on the inner side (50), an at least partially encircling upstanding portion (58) with a first recess (60) for receiving the stator (24).

6. Electric machine according to one of the preceding claims, **characterized in that**
- the bearing device (22) comprises a first bearing ring (36) and a second bearing ring (38),
- the first bearing ring (36) and the second bearing ring (38) are arranged on the axle (18), and
- an inner lateral surface (40) of the cavity (30) has a first bearing seat (42), with a first stop (44) for receiving and positionally fixing the first bearing ring (36) in the axial direction, and a second bearing seat (46), with a second stop (48) for receiving and positionally fixing the second bearing ring (38) in the axial direction.

7. Electric machine according to one of the preceding claims, **characterized in that**
- that portion of the axle (18) which projects into the cavity (30) has a first axle diameter (54) and a second axle diameter (56) which differs from the first axle diameter (54), wherein
- the portion of the second axle diameter (56) is formed between the portion of the first axle diameter (54) and the adapter device (16), and
- the second axle diameter (56) is larger than the first axle diameter (54), wherein
- the first bearing ring (36) is arranged on the first axle diameter (54) and the second bearing ring (38) is arranged on the second axle diameter (56).

8. Electric machine according to one of the preceding claims, **characterized in that** the rotor carrier (26) has, on a second rotor carrier face side (62) facing away from the adapter device (16), a shaft journal (64) which can be coupled to a transmission input shaft.

9. Electric machine according to one of the preceding claims, **characterized in that** the rotor carrier (26) has a cooling channel (72) with an inlet opening (74) and at least one outlet opening (76).

10. Electric machine according to Claim 9, **characterized in that**
- the inlet opening (74) is formed on a shaft journal face side (78) of the shaft journal (64), and
- the at least one outlet opening (76) is formed on an outer lateral surface (79) of the rotor carrier (26) adjacent to the laminated core (28) which is arranged on the rotor carrier (26), and/or on the first rotor carrier face side (32) facing towards the adapter device (16).

11. Electric machine according to one of the preceding claims, **characterized in that** a sensor magnet (86) or a magnetic field sensor (82) is formed on an axle face side (80), facing away from the adapter device (16), of the axle (18), and the respective other sensor is formed on a head side (84), facing towards the axle face side (80), of the rotor carrier (26).

12. Transmission arrangement (10) for a hybrid vehicle, comprising a transmission, preferably a double clutch transmission, with a transmission housing (14) encasing the transmission, wherein
- the transmission housing (14) has a wall projection (68) for receiving the electric machine (12) according to one of the preceding claims,
- and the wall projection (68) is connectable to the adapter device (16) such that the rotor (20) and the stator (24) are housed by the transmission housing (14) and/or the wall projection (68) and the adapter device (16) .

13. Transmission arrangement according to Claim 12, **characterized in that** the wall projection (68) has, at least in certain portions, a second recess (70) for receiving the stator (24).

14. Hybrid vehicle having a transmission arrangement (10) according to Claim 12.

## Revendications

1. Machine électrique (12) destinée à être agencée dans un carter de transmission (14), présentant
- un dispositif adaptateur (16),
- un axe (18) relié au dispositif adaptateur (16),
- un rotor (20) agencé sur l'axe (18) de manière à pouvoir tourner autour de l'axe (18) par l'intermédiaire d'un dispositif de palier (22), et
- un stator (24) entourant le rotor (20) dans la direction circonférentielle, qui peut être agencé dans le dispositif adaptateur (16) à distance du rotor (20) et qui peut être fixé au moins partiellement,
- le dispositif adaptateur (16) recouvrant partiellement le rotor (20) et/ou le stator (24) et étant un carter partiel de la machine électrique (12), **caractérisée en ce que**
- le rotor (20) présente un support de rotor (26) avec au moins un paquet de tôles (28) agencé sur le support de rotor (26), et
- le support de rotor (26) présente un espace creux (30) réalisé dans la direction axiale du support de rotor (26), qui comprend sur un premier côté frontal de support de rotor (32) tourné vers le dispositif adaptateur (16) une ouverture de réception (34) pour recevoir l'axe (18) et le dispositif de palier (22).

2. Machine électrique selon la revendication 1, **caractérisée en ce que** l'axe (18) traverse le dispositif adaptateur (16) et est relié à celui-ci par adhérence, par complémentarité de forme et/ou par liaison de matière.

3. Machine électrique selon la revendication 1, **caractérisée en ce que** le dispositif adaptateur (16) et l'axe (18) sont réalisés en une seule pièce.

4. Machine électrique selon l'une quelconque des revendications précédentes, **caractérisée en ce que** le dispositif adaptateur (16) présente, sur un côté intérieur (50) tourné vers le rotor (20), une saillie (52) entourant l'axe (18) au moins par sections.

5. Machine électrique selon l'une quelconque des revendications précédentes, **caractérisée en ce que** le dispositif adaptateur (16) présente sur le côté intérieur (50) un rebord (58) au moins partiellement périphérique avec un premier évidement (60) pour recevoir le stator (24) .

6. Machine électrique selon l'une quelconque des revendications précédentes, **caractérisée en ce que**
- le dispositif de palier (22) comprend une première bague de palier (36) et une deuxième bague de palier (38),
- la première bague de palier (36) et la deuxième bague de palier (38) sont agencées sur l'axe (18), et
- une surface d'enveloppe intérieure (40) de l'espace creux (30) présente un premier siège de palier (42) avec une première butée (44) pour recevoir et fixer en position la première bague de palier (36) dans la direction axiale, et un deuxième siège de palier (46) avec une deuxième butée (48) pour recevoir et fixer en position la deuxième bague de palier (38) dans la direction axiale.

7. Machine électrique selon l'une quelconque des revendications précédentes, **caractérisée en ce que**
- la section de l'axe (18) qui pénètre dans l'espace creux (30) présente un premier diamètre d'axe (54) et un deuxième diamètre d'axe (56) différent du premier diamètre d'axe (54),
- la section du deuxième diamètre d'axe (56) étant réalisée entre la section du premier diamètre d'axe (54) et le dispositif adaptateur (16), et
- le deuxième diamètre d'axe (56) étant plus grand que le premier diamètre d'axe (54),
- la première bague de palier (36) étant agencée sur le premier diamètre d'axe (54) et la deuxième bague de palier (38) étant agencée sur le deuxième diamètre d'axe (56) .

8. Machine électrique selon l'une quelconque des revendications précédentes, **caractérisée en ce que** le support de rotor (26) présente, sur un deuxième côté frontal de support de rotor (62) détourné du dispositif adaptateur (16), un tourillon d'arbre (64) qui peut être couplé à un arbre d'entrée de transmission.

9. Machine électrique selon l'une quelconque des revendications précédentes, **caractérisée en ce que** le support de rotor (26) présente un canal de refroidissement (72) avec une ouverture d'entrée (74) et au moins une ouverture de sortie (76).

10. Machine électrique selon la revendication 9, **caractérisée en ce que**
- l'ouverture d'entrée (74) est réalisée sur un côté frontal de tourillon d'arbre (78) du tourillon d'arbre (64), et
- l'au moins une ouverture de sortie (76) est réalisée sur une surface d'enveloppe extérieure (79) du support de rotor (26) à proximité du paquet de tôles (28) agencé sur le support de rotor (26) et/ou sur le premier côté frontal de support de rotor (32) tourné vers le dispositif adaptateur (16).

11. Machine électrique selon l'une quelconque des revendications précédentes, **caractérisée en ce qu'**un aimant de capteur (86) ou un capteur de champ magnétique (82) est réalisé sur un côté frontal d'axe (80) de l'axe (18) détourné du dispositif adaptateur (16) et l'autre capteur respectif est réalisé sur un côté de tête (84) du support de rotor (26) tourné vers le côté frontal d'axe (80).

12. Agencement de transmission (10) pour un véhicule hybride, comprenant une transmission, de préférence une transmission à double embrayage, avec un carter de transmission (14) enveloppant la transmission,
- le carter de transmission (14) présentant une saillie de paroi (68) pour recevoir la machine électrique (12) selon l'une quelconque des revendications précédentes,
- et la saillie de paroi (68) pouvant être reliée au dispositif adaptateur (16), de telle sorte que le rotor (20) et le stator (24) sont enfermés par le carter de transmission (14) et/ou la saillie de paroi (68) et le dispositif adaptateur (16).

13. Agencement de transmission selon la revendication 12, **caractérisé en ce que** la saillie de paroi (68) présente au moins par sections un deuxième évidement (70) pour recevoir le stator (24).

14. Véhicule hybride avec un agencement de transmission (10) selon la revendication 12.
